# DEMANDE DE BREVET EUROPEEN

(11) **EP 0 545 802 A1**
(43) Date de publication de la demande: **09.06.1993**
(21) Numéro de dépôt: 92403228.7
(22) Date de dépôt: 30.11.1992
(51) Int. Cl.: H04L 29/14, H04L 12/24

(54) **Ensemble de communication à sécurité opérationnelle**

(30) Priorité: 06.12.1991 FR 9115171
(71) Demandeur: RESEAUX DE COMMUNICATION D'ENTREPRISE, F-95614 Cergy-Pontoise Cédex (FR)
(72) Inventeur: Despres, Rémi, F-78360 Montesson (FR)
(74) Mandataire: Dawidowicz, Armand

(57) **Abrégé**

L'invention concerne un ensemble de communication constitué d'au moins deux noeuds (A, B, C, D), les noeuds (A, B, C, D) étant munis chacun d'au moins un port (1 à 12), des ports appartenant à des noeuds (A, B, C, D) distincts étant réunis par des liaisons (a, b, c, d, e, f), et tel qu'en cas d'état hors service de liaisons ou de noeuds, il se constitue un ou plusieurs réseaux opérationnels dont les liaisons relient des noeuds en service et ne réalisent pas de boucles de proche en proche.

Selon l'invention, les ports sont divisés en ports fixes (1, 2, 3) et en ports variables (4, 5, 6, 7, 8, 9, 10, 11, 12) agencés de manière particulière les uns par rapport aux autres.

Application à un arbre de communication.

## Description

La présente invention concerne un ensemble de communication constitué d'au moins deux noeuds, les noeuds étant munis chacun d'au moins un port, des ports appartenant à des noeuds distincts étant réunis par des liaisons, les liaisons constituant une configuration sans boucle.

Dans un tel ensemble de communication, une panne ou un défaut d'un ou plusieurs noeuds et/ou d'une ou plusieurs liaisons peut provoquer une perte de communication entre plusieurs noeuds qui restent cependant en état de service.

Diverses propositions ont été faites pour tenter de résoudre ce problème au moyen de liaisons supplémentaires qui ne sont mises en service qu'en cas de nécessité mais n'ont pas jusqu'à présent donné totale satisfaction du fait de la complication et du coût générés par de telles propositions, et également du fait qu'elles ne permettent pas, dans un nombre élevé de cas, de garantir le maintien en fonctionnement d'un réseau comprenant un nombre maximal de noeuds restant en état de service.

En conséquence, la présente invention vise à fournir un ensemble de communication du type décrit à l'introduction auquel ont été ajoutées des liaisons supplémentaires dans lequel, lorsqu'un sous-ensemble des noeuds et/ou liaisons n'est pas en état de marche, il s'établisse au bout d'un temps fini un ou plusieurs réseaux opérationnels dont les liaisons ne forment pas de boucle regroupant dans de nombreux cas en un seul réseau opérationnel un nombre maximal de noeuds restant en état de marche. L'invention doit en outre permettre, avec des moyens simples et économiques, la formation d'ensembles de configurations très variées.

A cet effet, l'ensemble de communication selon l'invention est caractérisé en ce que les noeuds comprennent des ports fixes, ne pouvant jamais prendre un état racine, et des ports variables pouvant prendre un état racine, le noeud racine d'un réseau opérationnel ne comportant aucun port variable en l'état racine et les autres noeuds comportant au plus un port en l'état racine, le noeud racine étant relié de proche en proche aux autres noeuds du même réseau opérationnel par des liaisons en état opérationnel reliant, en direction du noeud racine, un port en l'état racine à un port qui n'est pas en l'état racine, les ports variables d'un même noeud ayant un ordre de priorité, pré-attribué, deux ports variables reliés entre eux étant tels que l'un et un seul d'entre eux comporte un attribut de prépondérance et un moyen de transmission est agencé pour signaler à l'autre port variable auquel il est relié que ledit port variable prépondérant tente de devenir port en l'état racine, ledit signal étant, s'il existe au moins un port variable prépondérant, émis sur tout port variable prépondérant qui est le port en l'état racine ou qui est moins prioritaire que lui.

Selon une forme de réalisation de l'invention, un port variable ne peut devenir port racine de son noeud que s'il reçoit du port qui lui est relié un signal d'autorisation de mise en l'état racine, et un port fixe ou variable n'émet un signal d'autorisation de mise en l'état racine seulement s'il considère que la liaison est en état de marche et s'il n'est pas en l'état racine. On évite ainsi d'introduire dans le réseau opérationnel une liaison ne fonctionnant pas dans un sens. De préférence, dans ce cas, un signal d'autorisation de mise en l'état racine est transmis de la même façon que l'absence d'un signal de demande de mise en l'état racine sur la même liaison. Cette forme de réalisation permet d'utiliser une ligne de liaison unique pour chaque sens entre chaque couple de ports.

L'invention sera bien comprise à la lecture de la description suivante faite en se référant au dessin annexé dans lequel :

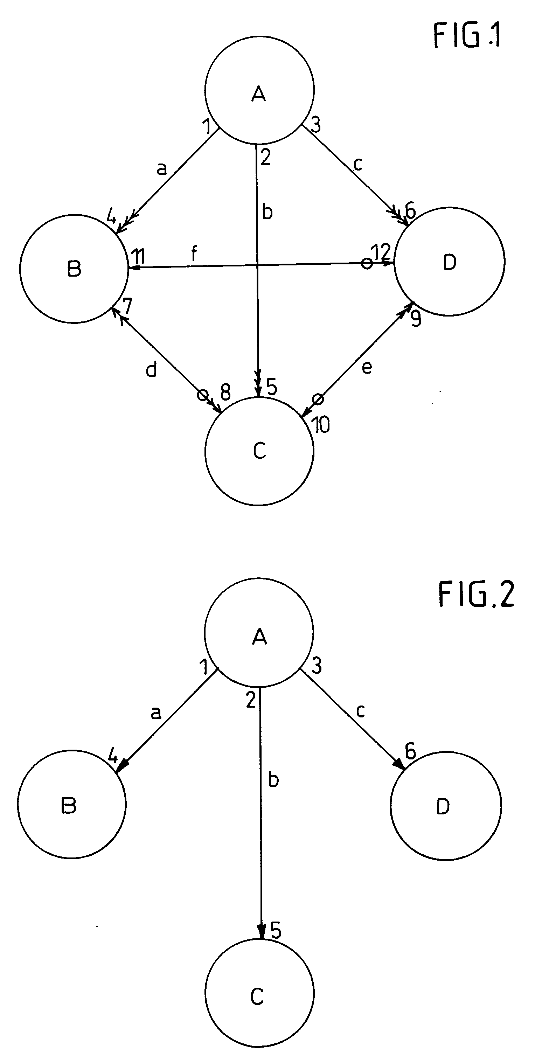

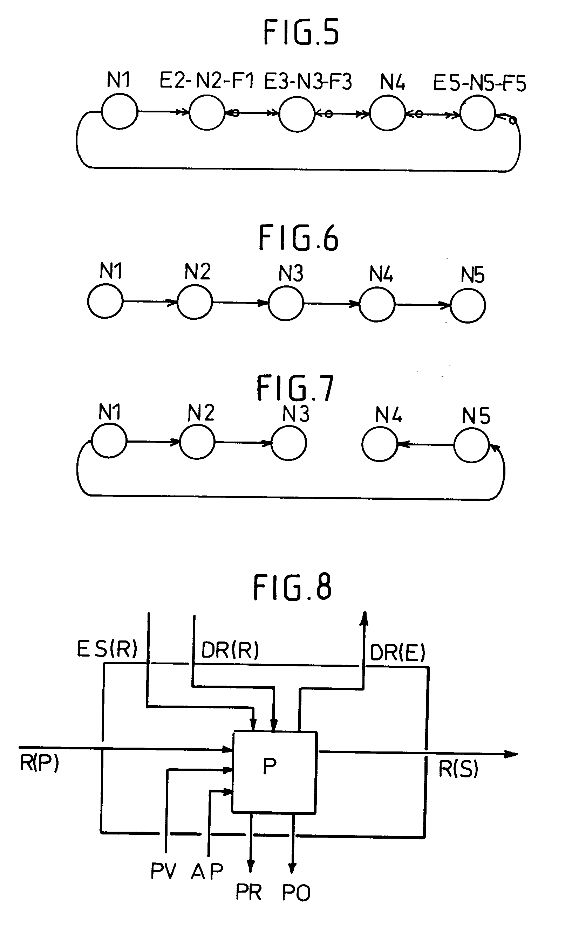

La figure 1 est un schéma d'un ensemble de communication selon un exemple de réalisation constitué de quatre noeuds disposés en carré et de !liaisons selon les côtés et les diagonales du carré; les figures 2 à 4 représentent l'ensemble de la figure 1, certaines des liaisons étant hors service; la figure 5 est un schéma d'une variante d'un ensemble de communication selon l'invention comportant des motifs répétitifs; les figures 6 et 7 représentent l'ensemble de la figure 5 avec chaque fois une liaison hors service; et la figure 8 est un schéma de câblage d'un port variable d'un ensemble de communication selon l'invention.

Dans la figure 1, l'ensemble de communication comprend quatre noeuds ou équipements de communication A, B, C, D, l'équipement A constituant la racine de l'arbre opérationnel normal. Le noeud A comporte trois ports 1, 2, 3 reliés respectivement à un port 4 du noeud B par une liaison, à un port 5 du noeud C par une liaison b, et à un port 6 du noeud D par une liaison c.

Le noeud B comporte un deuxième port 7 relié par une liaison d à un deuxième port 8 du noeud C.

Le noeud D comporte un deuxième port 9 relié par une liaison e à un troisième port 10 du noeud C.

Un troisième port 11 du noeud B est relié à un troisième port 12 du noeud D par une liaison f.

Conformément à l'invention, les ports 1, 2, 3 du noeud A, qui constitue la racine opérationnelle normale de l'ensemble, sont des ports fixes, non susceptibles de devenir des ports en l'état racine, ce qui est symbolisé par l'absence de flèche vers ces ports. Par contre, les ports 4 à 12 sont des ports variables et peuvent devenir des ports en l'état racine (PR) dans les conditions qui vont être expliquées ci-après.

Un port fixe est relié à un port qui, en l'absence de liaison ou noeud en panne, est en l'état racine, chaque noeud, en dehors du noeud racine qui n'en comporte pas, ne comportant qu'un seul port en l'état racine. Donc, dans le cas de fonctionnement normal de la figure 1, les ports 4, 5 et 6 sont des ports en l'état racine et les ports 7, 8, 9, 10, 11 et 12 sont des ports non en l'état racine. Le noeud racine A donne un accès à une racine au noeud B par la liaison a, au noeud C par la liaison b et au noeud D par la liaison c.

En outre, et toujours conformément à l'invention, les ports d'un même noeud ont une priorité hiérarchisée, ce qui est symbolisé par une triple flèche pour les ports 4, 5, 6 ayant la priorité la plus élevée pour les noeuds B, C, D respectivement, par une double flèche pour les ports 7, 8, 9 ayant la deuxième priorité pour les noeuds B, C, D respectivement, et par une flèche simple pour les ports 10, 11, 12 ayant la priorité la plus basse pour les noeuds B, C, D respectivement.

De plus, dans la liaison entre deux ports variables, l'un d'eux et un seul a un attribut de prépondérance symbolisé par un petit cercle pour les ports 8, 10 et 12 les liaisons d, e et f respectivement. Cet attribut de prépondérance signifie que, lorsque les deux ports d'une telle liaison tentent simultanément de devenir ports en l'état racine, c'est celui qui est muni de l'attribut qui le devient. A cet effet, un moyen de transmission permet à un port muni d'un attribut de prépondérance d'envoyer un signal (DR) au port auquel il est relié pour indiquer une demande à devenir port en l'état racine. Ce signal DR n'est émis que si le port prépondérant est le port en l'état racine ou est moins prioritaire que lui.

Dans le cas d'une ou plusieurs pannes des liaisons d, e,f (figure 2), l'alimentation des noeuds B, C et D se fait respectivement par les liaisons a, b, c comme précédemment, les ports 4, 5 et 6 restant en l'état racine.

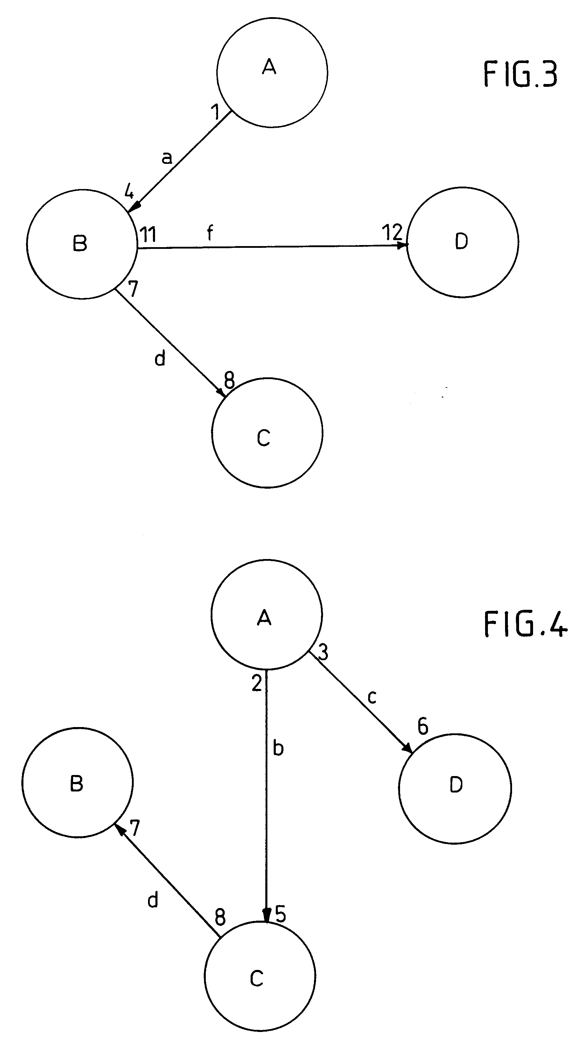

On a représenté à la figure 3 le cas d'une panne ou d'une rupture des liaisons b, c, e. Le port 4 du noeud B est resté port en l'état racine. Le port 8, prépondérant sur la liaison d, est devenu port en l'état racine. Il en est de même pour le port 12 du noeud D, prépondérant sur la liaison f. Le noeud racine A donne un accès à une racine au noeud B qui donne à son tour un accès à une racine aux noeuds C et D.

Dans le cas de la figure 4, les liaisons a, e et f sont interrompues. Sur le noeud D, le port 6 est resté en l'état racine. Le port 5 du noeud C est également resté en l'état racine. Le port 7 du noeud B est devenu en l'état racine. Le noeud racine A donne un accès à une racine aux noeuds C et D et le noeud C donne un accès à une racine au noeud B par la liaison d.

Dans le cas de la figure 5 où la prépondérance est sans utilité, l'ensemble de communication est formé par des motifs répétitifs constitués chacun d'un noeud N avec deux ports, les noeuds N étant reliés en série. Le premier noeud N1 est le noeud racine du réseau opérationnel normal et ses ports sont en conséquence fixes. Les autres noeuds N2, N3, N4, N5 comportent chacun un port de priorité plus élevée E et un port de priorité moins élevée F. Pour les noeuds N2 à N4, le port F est en outre prépondérant. Le noeud NI donne accès à une racine au noeud N2, qui donne accès à une racine au noeud N3, lequel donne accès à une racine au noeud N4 qui donne accès à une racine au noeud N5.

Dans le cas d'une interruption de la liaison entre les noeuds N1 et N5 (figure 6), les accès au noeud racine restent identiques.

Dans le cas d'une interruption de la liaison entre les noeuds N3 et N4 (figure 7), le noeud N1 donne accès à une racine au noeud N2 qui donne accès à une racine au noeud N3. Le noeud N1 donne également accès à une racine au noeud N5 qui donne accès à une racine au noeud N4.

On se réfère maintenant à la figure 8 qui représente un exemple de réalisation d'un port variable de l'ensemble de communication selon l'invention. Le port P comporte une entrée de liaison R (P) avec le port précédent dans l'ordre des priorités décroissantes permettant le passage d'un signal indiquant qu'il existe une racine du côté du port précédent. Une sortie R (S) permet la transmission d'un tel signal au port suivant. Une entrée AP permet d'indiquer au port P l'attribution de prépondérance sur la liaison. Une sortie P0 permet le passage d'un signal indiquant que le port P est opérationnel alors qu'une sortie PR permet le passage d'un signal indiquant que le port P est en l'état racine, ceci pour le cas où l'application qui est faite du réseau opérationnel nécessite que ses liaisons soient orientées. Une ligne de sortie DR (E) sert à émettre une demande de mise en l'état racine alors qu'une ligne d'entrée DR (R) est prévue pour recevoir un signal de demande de racine. Une ligne ES (R) indique que la liaison d'entrée est en service. Il n'y a pas de signal sur DR (R) si la liaison est hors service. Une ligne d'entrée PV indique que le port est variable.

Conformément à l'invention, il existe un signal sur PR si et seulement s'il y a un signal sur PV, pas de signal sur R (P), un signal sur ES (R) et pas de signal sur DR (R).

De même, il existe un signal sur P0 si et seulement si un signal est émis sur PR ou bien si des signaux sont reçus sur ES (R) et sur DR (R).

Un signal est émis sur R (S) si et seulement si un signal existe sur R (P) ou sur PR.

DR (E) émet un signal si et seulement s'il existe un signal sur PV, pas de signal sur R (P), et un signal sur AP ou pas de signal sur DR (R), ou bien s'il n'existe pas de signal sur ES (R) (ce qui correspond à une absence d'autorisation de mise en l'état racine pour une liaison coupée).

## Revendications

1. Ensemble de communication constitué d'au moins deux noeuds (A, B, C, D; N1, N2, N3, N4, N5), les noeuds (A, B, C, D; N1, N2, N3, N4, N5) étant munis chacun d'au moins un port (1 à 12; E, F), des ports appartenant à des noeuds (A, B, C, D, N1, N2, N3, N4, N5) distincts étant réunis par des liaisons (a, b, c, d, e, f), et tel qu'en cas d'état hors service de liaisons ou de noeuds, il se constitue un ou plusieurs réseaux opérationnels dont les liaisons relient des noeuds en service et ne réalisent pas de boucles de proche en proche, caractérisé en ce que les ports comprennent des ports fixes (1, 2, 3) ne pouvant jamais prendre un état racine et des ports variables (4, 5, 6, 7, 8, 9, 10, 11, 12; E2-E5, F2-F5) pouvant prendre un état racine, le noeud racine d'un réseau opérationnel (A; NI) ne comportant aucun port variable en l'état racine, et les autres noeuds (B, C, D; N2, N3, N4, N5) comportant un port en l'état racine, le noeud racine (A; NI) étant relié de proche en proche aux autres noeuds du même réseau opérationnel (B, C, D; N2-N5) en état opérationnel par des liaisons (a, b, c, d, f) reliant, en direction du noeud racine (A; NA), un port en l'état racine à un port qui n'est pas en l'état racine, les ports variables (4, 7, 11; 5, 8, 10; 6, 9, 12; E2-E5, F2-F5), d'un même noeud (B; C; D; N2-N5) ayant un ordre de priorité, pré-attribué, deux ports variables reliés entre eux étant tels que l'un et un seul d'entre eux comporte un attribut de prépondérance et un moyen de transmission est agencé pour signaler à l'autre port variable auquel il est relié que ledit port variable prépondérant tente de devenir port en l'état racine, ledit siqnal étant, s'il existe au moins un port variable prépondérant, émis sur tout port variable prépondérant qui est le port en l'état racine ou qui est moins prioritaire que lui.

2. Ensemble de communication selon la revendication 1,
caractérisé en ce qu'un port variable (4, 5, 6, 7, 8, 9, 10, 11, 12) ne peut devenir port racine de son noeud (B, C, D) que s'il reçoit du port (4, 5, 6, 7, 8, 9, 10, 11, 12) qui lui est relié un siqnal d'autorisation de mise en l'état racine, et un port fixe ou variable (1, 2, 3, 4, 5, 6, 7, 8, 9, 10, 11, 12) n'émet un siqnal d'autorisation de mise en l'état racine seulement s'il considère que la liaison est en état de marche et s'il n'est pas en l'état racine.

3. Ensemble de communication selon la revendication 2,
caractérisé en ce qu'un siqnal d'autorisation de mise en l'état racine est transmis de la même façon que l'absence d'un siqnal de demande de mise en l'état racine.
